## Europäisches Patentamt
## European Patent Office
## Office européen des brevets

(11) Veröffentlichungsnummer: **0 036 567**
**B1**

(12) **EUROPÄISCHE PATENTSCHRIFT**

(45) Veröffentlichungstag der Patentschrift:
14.05.86

(21) Anmeldenummer: 81101804.3

(22) Anmeldetag: 12.03.81

(51) Int. Cl.⁴: **G 05 D 23/24, F 24 D 19/10**

(54) **Steuereinrichtung für einen Umlaufwasserheizer.**

(30) Priorität: 22.03.80 DE 8008247 U

(43) Veröffentlichungstag der Anmeldung:
30.09.81 Patentblatt 81/39

(45) Bekanntmachung des Hinweises auf die Patenterteilung:
14.05.86 Patentblatt 86/20

(84) Benannte Vertragsstaaten:
AT BE CH FR GB IT LI LU NL SE

(56) Entgegenhaltungen:
DE - A - 1 679 420
DE - A - 2 540 406
DE - B - 2 840 805
DE - C - 2 707 591
FR - A - 2 332 672

**Die Akte enthält technische Angaben, die nach dem
Eingang der Anmeldung eingereicht wurden und die
nicht in dieser Patentschrift enthalten sind.**

(73) Patentinhaber: **Joh. Vaillant GmbH u. Co., Berghauser
Strasse 40 Postfach 10 10 20, D-5630 Remscheid 1 (DE)**
(84) Benannte Vertragsstaaten: **IT LU SE**

(73) Patentinhaber: **COFRABEL N.V., Goldenhopestraat 15,
B-1620 Drogenbos (BE)**
(84) Benannte Vertragsstaaten: **BE**

(73) Patentinhaber: **VAILLANT S.A.R.L, 4, Rue des Oliviers
Orly-Sénia 326, F-94537 Rungis Cedex (FR)**
(84) Benannte Vertragsstaaten: **FR**

(73) Patentinhaber: **VAILLANT Ges.m.b.H,
Forchheimergasse 7 Postfach 56, A-1233 Wien (AT)**
(84) Benannte Vertragsstaaten: **AT**

(73) Patentinhaber: **Vaillant Ltd., Vaillant Building,
Aerodrome Way Heston Industrial Estate, GB-Hounslow,
Middx. TW5 9QB (GB)**
(84) Benannte Vertragsstaaten: **GB**

(73) Patentinhaber: **SCHONEWELLE B.V., Ellermanstraat 17,
NL-1099 BX Amsterdam (NL)**
(84) Benannte Vertragsstaaten: **NL**

(73) Patentinhaber: **Vaillant GmbH, Riedstrasse 8,
CH-8953 Dietikon 1 (CH)**
(84) Benannte Vertragsstaaten: **CH LI**

(72) Erfinder: **Taag, Jürgen, Joachimstrasse 14,
D-5630 Remscheid (DE)**

(74) Vertreter: **Heim, Johann-Ludwig, c/o Joh. Vaillant GmbH
u. Co Postfach 10 10 20 Berghauser Strasse 40,
D-5630 Remscheid 1 (DE)**

ACTORUM AG

**Beschreibung**

Die vorliegende Erfindung bezieht sich auf eine Steuereinrichtung für einen Umlaufwasserheizer gemäss dem Oberbegriff des Anspruchs 1.

Hauptanwendungsgebiet der Erfindung sind brennstoffbeheizte Wärmequellen in Gestalt von Umlaufwasserheizern oder Kesseln für Gas- oder Ölbetrieb zur Beheizung von Zentralheizungen mit und ohne Brauchwasserbereiter.

Aus der DE-PS 27 07 591 ist eine Schaltung zur Steuerung des Puls-Pausenverhältnisses des Arbeitszustandes einer Wärmequelle bekanntgeworden, bei der diese Steuerung in Abhängigkeit von der Vorlauftemperatur oder der Aussentemperatur erfolgen kann. Je nach vorhandener Aussentemperatur beziehungsweise Vorlauftemperatur und nach eingestelltem Sollwert (Heizkurve) resultiert somit ein bestimmtes Puls-Pausenverhältnis für die Einschaltung des Brenners der Wärmequelle. Es besteht nunmehr häufig die Forderung, eine solche Heizungsanlage auch mit einer Nachtabsenkung zu betreiben.

Aus der DE-B1-28 40 805 ist bei einer ähnlichen Steuereinrichtung für einen gas- oder ölbeheizten Umlaufwasserheizer bekannt, bei Übergang von der Nachtabsenkung auf den Tag-Sollwert eine Schnellaufheizung vorzusehen, bei der in Abhängigkeit von der Aussentemperatur die zur Verfügung gestellte Heizleistung erhöht wird. Als Stellglied wirkt hierbei z.B. ein über einen Verstärker angesteuertes Magnetventil.

Somit liegt der Erfindung die Aufgabe zugrunde, bei einer Steuereinrichtung zur Steuerung der Leistungsabgabe eines Wärmeerzeugers mittels eines Puls-Pausenverhältnisses mit konstanter Zykluszeit der Brennzeiten eines Brenners die Vorlauftemperatur abhängig von der Aussentemperatur und umschaltbaren Sollwerten zu begrenzen.

Die Lösung dieser Aufgabe gelingt mit den in dem kennzeichnenden Teil des Anspruchs 1 vorgesehenen Merkmalen.

Weitere Ausgestaltungen der Erfindung sind Gegenstand der Unteransprüche.

Ein Ausführungsbeispiel der Erfindung ist im folgenden anhand der Figuren eins und zwei der Zeichnung näher erläutert.

Es bedeuten

Figur eins ein Prinzipschaltbild eines Umlaufwasserheizers und

Figur zwei ein Blockschaltbild der Steuereinrichtung.

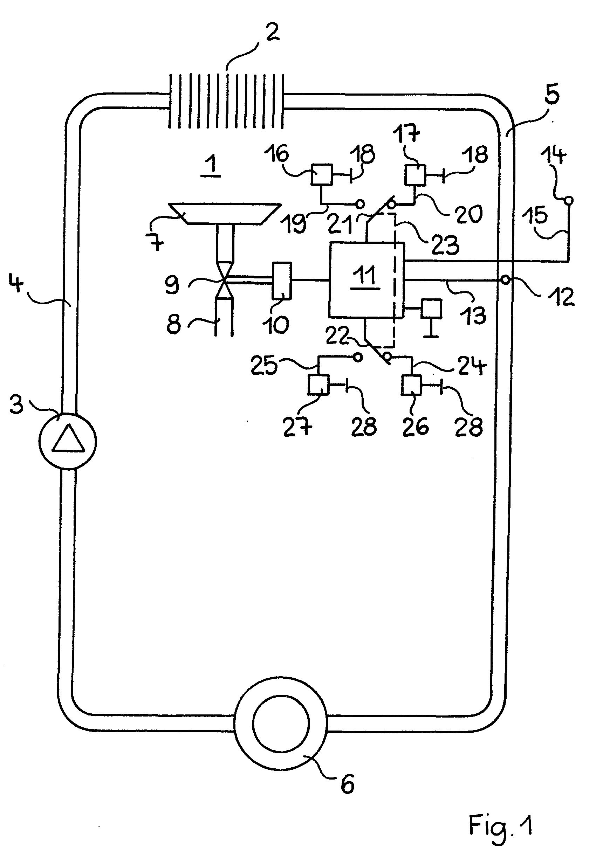

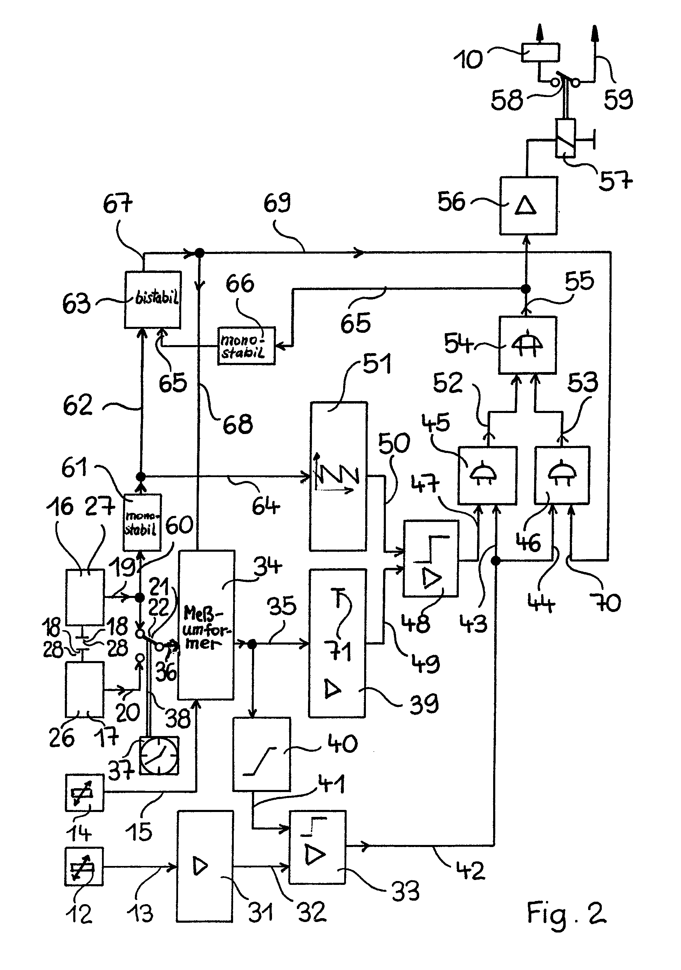

Die Wärmequelle 1 gemäss Figur 1 in Gestalt eines gas- oder ölbefeuerten Kessels oder Umlaufwasserheizers weist einen Wärmetauscher 2 auf, dem Umlaufwasser über eine mit einer Pumpe 3 versehene Rücklaufleitung 4 zugeführt wird und dem das Wasser über eine Vorlaufleitung 5, die zu einem Verbraucher 6 führt, abgeführt wird. Der Verbraucher 6 besteht aus einer Vielzahl in Serie oder parallel geschalteter Heizkörper. Der Wärmetauscher 2 der Wärmequelle ist von einem Gasbrenner 7 beheizt, dem Gas über eine Brennstoffzufuhrleitung 8 unter Zwischenschaltung eines Brennstoffventils 9 zugeführt wird. Das Brennstoffventil 9 kann zwei diskrete Zustände einnehmen, entweder es ist voll geschlossen oder voll geöffnet. Das Brennstoffventil 9 wird von einer Magnetspule 10 beaufschlagt, der Stellsignale von der Steuereinrichtung 11 zugeführt werden. An die Steuereinrichtung 11 ist ein Vorlauftemperaturfühler 12 über eine Messleitung 13 und ein Aussentemperaturfühler 14 über eine Messleitung 15 angeschlossen. Die Sollwerte, beziehungsweise Grenzwerte für die Steuereinrichtung 11 werden dargestellt vom Grenzwertgeber 16 für die Tagheizkurve, einem Grenzwertgeber 17 für die Nachtheizkurve, die beide über Knöpfe 18 einstellbar sind. Beide Grenzwertgeber 16 und 17 sind über Leitungen 19 und 20 mit einem Umschalter 21 verbunden, über den entweder der eine oder der andere Grenzwertgeber angeschlossen werden kann. Mit dem Umschalter 21 ist ein weiterer Umschalter 22 gekoppelt, was durch die Wirklinie 23 dargestellt ist. Der Umschalter 22 kann entweder auf eine Leitung 24 oder eine Leitung 25 gelegt werden, beide Leitungen führen zu Grenzwertgebern 26 und 27, die gleichermassen über Knöpfe 28 einstellbar sind. Der Grenzwertgeber 26 gibt den Sollwert für die nächtliche Vorlauftemperatur vor, während der Grenzwertgeber 27 den Sollwert für die Vorlauftemperatur tagsüber vorgibt.

Der eigentliche Aufbau der gesamten Steuereinrichtung 11 geht aus dem Prinzipschaltbild der Figur zwei hervor.

Der Vorlauftemperaturfühler 12 besteht aus einem temperaturabhängigen Widerstand, der über die Leitung 13 mit einem Messumformer beziehungsweise einstellbaren Verstärker 31 verbunden ist. Der Ausgang 32 dieses Verstärkers, auf dem ein mit der Vorlauftemperatur linear-proportional-variables Spannungssignal erscheint, ist an dem Eingang eines Komparators 33 gegeben. Der Aussentemperaturfühler 14 ist gleichfalls ein Widerstand, der seinen Widerstandswert nach Massgabe der Temperatur verändert. Die Leitung 15 des Aussentemperaturfühlers 14 ist mit einem Messumformer 34 verbunden, an dessen Ausgang 35 ein Gleichspannungssignal herrscht. Der Messumformer 34 ist über eine Leitung 36 dem Umschaltkontakt 21, 22 vorgeschaltet, der zu den beiden Soll- beziehungsweise Grenzwertgebern 17, 26 beziehungsweise 16, 27 führt. Während nach Figur eins getrennte Grenzwertgeber sowohl für die Tag- und Nachtvorlauftemperatur als auch für die Tag- und Nachtheizkurve vorgesehen sind, sind diese Grenzwertgeber beim Ausführungsbeispiel bei Figur zwei zu einem einzigen Grenzwertgeber zusammengefasst. Eine Einstellung der Sollwertgeber bezüglich der Heizkurve besagt, dass in Abhängigkeit von einer vorgegebenen Aussentemperatur ein bestimmtes Puls-Pausenverhältnis mit einer von der Aussentemperatur abhängigen maximalen Vorlauftemperatur resultieren soll. Somit wird bei Variationen der Aussentemperatur sowohl das Puls-Pausenverhältnis als auch die Vorlauftemperatur auf unterschiedliche Werte gesteuert. Nach Massgabe der an den Soll- beziehungsweise Grenzwertgebern eingestellten

Heizkurven resultiert am Ausgang 35 des Messumformers 34 somit ein Gleichspannungssignal, dessen Höhe abhängig von diesen eingestellten Sollwerten ist und zusätzlich abhängig von der jeweils herrschenden vom Fühler 14 gefühlten Aussentemperatur ist.

Der Kontakt 21 beziehungsweise 22 ist von einer Uhr 37 über eine Stange 38 betätigt. Der Ausgang 35 des Messumformers ist nicht nur mit dem Eingang eines Messverstärkers 39, sondern auch mit einem Minimum- und Maximumspannungsbegrenzer 40 verbunden. Dieses Bauteil gibt eine Spannung von der Leitung 35 auf die Leitung 41 unverändert durch, so lange diese Spannung oberhalb eines an dem Bauteil 40 einstellbaren Minimalspannungswertes beziehungsweise unterhalb eines dort einstellbaren Maximalspannungswertes liegt. Unterschreitet die Spannung auf der Leitung 35 diesen Minimalspannungswert, so wird der Minimalspannungswert selbst durchgegeben. Der Spannungsbegrenzer 40 ist über eine Leitung 41 mit dem Komparator 33 verbunden. Der Komparator vergleicht die Spannungswerte auf den Leitungen 32 und 41, seine Ausgangsleitung 42 ist mit Eingängen 43 und 44 zweier UND-Glieder 45 und 46 verbunden. Der zweite Eingang 47 des UND-Gliedes 45 ist über einen weiteren Komparator 48 und eine Leitung 49 mit dem bereits erwähnten Messumformer 39 verbunden. Der zweite Eingang 50 des Komparators 48 ist vom Ausgang eines Sägezahnspannungsgenerators 51 gespeist.

Ausgänge 52 und 53 der beiden UND-Glieder bilden Eingänge eines ODER-Gliedes 54, dessen Ausgang 55 über einen Verstärker 56 zu einem Schütz 57 geführt ist, dessen Arbeitskontakt 58 in einem Stromkreis 59 für die Magnetspule 10 liegt.

Die Leitung 19 ist mit einem Eingang 60 einer monostabilen Kippstufe 61 verbunden, deren Ausgang über eine Leitung 62 mit einem Eingang einer bistabilen Kippstufe 63 verbunden ist. Die Leitung 62 ist über eine Leitung 64 mit dem Sägezahnspannungsgenerator 51 verbunden, und zwar mit dessen Rücksetz-Eingang.

Ein zweiter Eingang 65 der bistabilen Kippstufe 63 ist über eine monostabile Kippstufe 66 mit der Ausgangsleitung 55 des Odergliedes 54 verbunden. Ein Ausgang 67 der bistabilen Kippstufe 63 ist über eine Leitung 68 mit dem Messwertumformer 34 verbunden und über eine Leitung 69 als zweiter Eingang 70 des UND-Gliedes 46.

Die eben beschriebene Steuereinrichtung besitzt folgende Funktion: Es wird ausgegangen von einem Tagbetrieb, das heisst, der Umschaltkontakt 21 liegt in der dargestellten Lage. Die Vorlauftemperatur soll unter dem am Sollwertgeber 16 eingestellten Wert liegen. Der Sägezahnspannungsgenerator 51 läuft frei, die Zykluszeit, innerhalb der eine Einschaltdauer erfolgen kann, ist durch die Periodendauer des Sägezahnspannungsgenerators 51 vorgegeben. Zu Beginn der Zykluszeit fängt der Sägezahnspannungsgenerator von einem Maximalspannungswert in Richtung auf kleinere Spannung an zu laufen. Die Ausgangsspannung auf der Leitung 50 weist somit zunächst den Maximalwert auf, es sei angenommen, dass der Spannungswert auf der Leitung 49 unter diesem Wert liegt. Das ist dann der Fall, wenn der am Sollwertgeber 16 gerade eingestellte Wert und der Wert der Aussentemperatur mittlere Werte annehmen. Für den Fall einer sehr hohen Aussentemperatur oder eines auf sehr kleine Werte eingestellten Sollwertes kann der Spannungswert auf der Leitung 49 so gross sein, dass der Komparator auch zu Beginn des Zyklus nicht durchschalten kann. Der durchgeschaltete Komparator 48 liefert ein Spannungssignal auf der Leitung 47 für das UND-Glied 45. Der andere Eingang 43 dieses UND-Gliedes wird von den Werten der Vorlauftemperatur beaufschlagt. Liegt gemäss der Annahme die gerade vorhandene Vorlauftemperatur unterhalb der angestrebten Vorlauftemperatur, so schaltet das UND-Glied 45 durch, so dass über die Leitung 52 auch das ODER-Glied 54 durchschaltet und über den Verstärker 56 und das Schütz 57 die Betätigungsspule 10 für das Brennstoffventil mit Spannung beaufschlagt wird. Das heisst, dass jeweils innerhalb einer Periode neu eine bestimmte Pulszeit für das Brennen des Brenners erzeugt wird. Die Länge der Pulszeit, bezogen auf die Gesamtzykluszeit, ist bei dieser Betriebsweise nur davon abhängig, wie weit die Aussentemperatur vom gerade eingestellten Sollwert abweicht. Man kann die Steilheit der Heizkurve in die Funktion des Sollwertgebers 16 integrieren, man könnte auch eine extra Einstellmöglichkeit im Rahmen einer Handhabe 71 am Messverstärker 39 vorsehen, um so die Verstärkung dieses Messverstärkers einstellbar zu halten.

Unterstellt man nunmehr, dass über das sich einstellende Puls-Pausenverhältnis eine grössere Wärmeerzeugung resultiert, als von der Heizungsanlage im Verbraucher 6 abgegeben wird, so steigt die Vorlauftemperatur. Die steigende Vorlauftemperatur wird im Komparator 32 mit dem Sollspannungswert auf der Leitung 41 verglichen, nur wird dem Komparator ein Mindestspannungswert auf der Leitung 41 vorgegeben. So lange somit der Spannungswert auf der Leitung 32 kleiner ist als der Grenzwert auf der Leitung 41, arbeitet die Anlage wie eben beschrieben. Werden beide Werte gleich, so sperrt der Komparator, so dass das UND-Glied 45 nicht mehr durchschalten kann.

Wird gegen 22.00 Uhr jenachdem auf der Uhr 37 eingestellten Zeitwert die Nachtabsenkung wirksam, so schaltet der Kontakt 21 auf die Leitung 20 um. Das bedeutet in der Regel einen niedrigeren Sollwert für die Vorlauftemperatur und das Puls-Pausenverhältnis. Hieraus resultiert ausser der sprunghaften Absenkung noch keine Änderung der Arbeitsweise der Schaltung. Schaltet der Uhrkontakt nach Ende der Nachtabsenkung, also am frühen Morgen wieder in die dargestellte Lage zurück, so ergeben sich folgende Änderungen: Das Umschalten des Kontaktes 21 bewirkt ein Setzen der monostabilen Kippstufe 61 und damit einen Spannungsimpuls auf der Leitung 62, was zu einem Umschalten der bistabilen Kippstufe 63 führt. Gleichzeitig wird über die Leitung 64 der Sägezahnspannungsgenerator 51 zurückgesetzt, so dass er damit einen neuen Zyklus beginnt. Die monostabile Kippstufe 61 verlässt ihren Schaltzustand nach Ablauf der an ihr eingestellten Zeit, ohne dass das weitere Auswirkungen für die Schaltung hat. Die umgeschaltete bistabile Kippstufe 63 schaltet einen Spannungswert über die Leitungen 67 und 68 auf den Messumformer 34 in dem Sinne, dass, solange die bistabile Kippstufe 63 gesetzt ist, der auf der Leitung 35 resultierende Spannungswert auf eine bestimmte und einstellbare Stufe erhöht wird. Das entspricht in der Wirkung einem sprunghaft erhöhtem Sollwert, der auch an dem Geber 18, 28 für den Sollwertgeber 16 eingestellt sein könnte. Das Spannungssignal auf der Leitung 68 hat die Wirkung einer Versteilerung der Heizkurve. Gleichfalls wird über die Leitung 67, 69 Spannung an den Eingang 70 des UND-Gliedes 46 gegeben, so dass das UND-Glied 45 so lange überbrückt ist, wie die Vorlauftemperatur den Sollwert noch nicht erreicht hat. Das bedeutet auf jeden Fall ein Durchschalten dieses UND-Gliedes und ein Durchschalten des ODER-Gliedes 54, das heisst, die Spule 57 ist beaufschlagt und damit der Brenner freigegeben, was einem stetigen Brennen des Brenners über eine oder mehrere Zykluszeiten entspricht. Dieser Vorgang findet dann ein Ende, wenn die steigende Vorlauftemperatur mit dem – erhöhten – Sollwert auf der Leitung 41 verglichen ist und der Komparator 33 bei Gleichheit beider Werte nicht mehr durchschaltet. Ist dieser Zustand erreicht, fehlen die Spannungssignale auf den Eingangsleitungen 43 und 44 beider UND-Glieder 45 und 46, so dass der Brenner wieder ausgeschaltet wird. Der eben dargestellte Zustand entspricht einer Schnellaufheizung mit einem Puls-Pausenverhältnis von 100%. Übersteigt der Vorlauftemperatur-Sollwert den im Spannungsbegrenzer 40 eingestellten Maximalspannungswert, so wird nur dieser durchgegeben. Das erste Ausschalten des Brenners, entsprechend einem Spannungsloswerden der Leitung 55, führt zu einem Spannungsstoss auf der Leitung 65, abgegeben von der monostabilen Kippstufe 66. Dieser Spannungsimpuls bewirkt ein Rücksetzen des Speichers 63 in den Ursprungszustand. Damit entfällt der Spannungswert auf den Leitungen 68 und 69, das heisst, der Spannungswert auf der Leitung 35 geht in den Ursprungszustand zurück und das UND-Glied 46 sperrt bis zur nächsten Schnellaufheizung. Dieser Zustand entspricht dem eingangs geschilderten normalen Tagbetrieb.

### Patentansprüche

1. Steuereinrichtung (11) für ein Brennstoffventil (9) eines Umlaufwasserheizers (1) nach einem Puls-Pausenverhältnis mit konstanter Zykluszeit in Abhängigkeit von der Aussentemperatur (14) mit einer dieser Steuerung überlagerten Vorlauftemperaturregelung, wobei der Sollwertgeber (16, 17) für die Steuerung und für die Regelung ein von der Aussentemperatur abgeleitetes Signal zur Verfügung stellt, das für Tag und Nacht in seinem Wert umschaltbar ist, dadurch gekennzeichnet, dass die Vorlauftemperatur von einem Grenzwertgeber (26, 27) überwacht ist, dessen Grenzwert mit einem Tag-/Nachtumschalter (37, 38, 21, 22) zusätzlich nach Massgabe der Aussentemperatur veränderbar ist.

2. Steuereinrichtung nach Anspruch 1, dadurch gekennzeichnet, dass ein einstellbarer Minimalgrenzwert sowie ein mit der Aussentemperatur sowie der Tag-Nachtheizkurve variabler Maximalgrenzwert für die Vorlauftemperatur vorgegeben sind, zwischen denen die Vorlauftemperatur gesteuert ist, so dass auch Umlaufwasserheizer (1), deren Vorlauftemperatur gewisse Grenzwerte nicht unterschreiten darf, angesteuert werden können.

3. Steuereinrichtung nach Anspruch 1 oder 2, dadurch gekennzeichnet, dass bei Übergang von der Nachtabsenkung auf den Tag-Sollwert eine Schnellaufheizung vorgesehen ist, bei der in Abhängigkeit von der Aussentemperatur der Grenzwert für die Vorlauftemperatur angehoben wird und das Brennstoffventil (9) erst dann abgeschaltet wird, wenn dieser Wert erreicht wird.

4. Steuereinrichtung nach Anspruch 2, dadurch gekennzeichnet, dass die Tag- und Nacht-Grenzwertgeber (16, 17, 26, 27) für die Vorlauftemperatur über einen uhrgesteuerten Umschaltkontakt (21, 22) und einen Minimalgrenzwertgeber (40) auf einen Eingang (41) eines Komparators (33) geschaltet sind, dessen anderer Eingang mit dem Vorlauftemperatur-Istwertgeber (12) verbunden ist.

### Claims

1. A control system (11) for a control of a fuel valve (9) of a heater (1) for circulating water in accordance with a mark-to-space ratio and with a constant cycle time in dependence on the outdoor temperature (14), comprising means for effecting a flow temperature automatic control which is superimposed on said control, wherein the set point adjuster (16, 17) for said control and automatic control provides for said control and automatic control a signal which has been derived from the outdoor temperature and is adapted to be changed between different values for day and night, characterized in that the flow temperature is monitored by a limit signal generator (26, 27), the limit signal of which is additional variable in dependence on the outdoor temperature by means of a day-night change-over switch (37, 38, 21, 22).

2. A control system according to claim 1, characterized in that an adjustable upper limit and a lower limit for the flow temperature are predetermined, said upper limit is variable in dependence on the outdoor temperature and on the day-night heating curve and the flow temperature is controlled between said lower and upper limits so that it is possible to control also heaters (1) for circulating water in such a manner that the flow temperature does not fall below certain lower limits.

3. A control system according to claim 1 or 2, characterized in that the change from the lower set point for night operation to the set point for day operation results in a rapid heating-up operation, during which the limit for the flow temperature is raised in dependence on the outdoor temperature and the fuel valve (9) is not closed until that limit has been reached.

4. A control system according to claim 2, characterized in that all limit signal generators (16, 17, 26, 27) for controlling the day and night flow temperature are connected via a timer-controlled changeover switch (21, 22) and a lower limit signal generator (40) to one input (41) of a comparator (33), the other input of which is connected to the actual flow temperature signal generator (12).

**Revendications**

1. Régulateur (11) pour une valve d'alimentation en combustible (9) d'un chauffe-eau à circulation (1), fonctionnant suivant un rapport impulsions/intervalles à cycle constant en fonction de la température extérieure (14), une régulation de la température d'alimentation des récepteurs étant superposée au fonctionnement de ce régulateur, le générateur de signaux de consigne (16, 17) émettant un signal pour le régulateur et pour la régulation en fonction de la température extérieure et dont la valeur peut être variée pour service de jour et de nuit, caractérisé par le fait que la température d'alimentation est contrôlée par un générateur de signaux (26, 27) dont le seuil peut de plus être varié par l'action d'un commutateur de service de jour/nuit (37, 38, 21, 22) en fonction de la température extérieure.

2. Régulateur suivant la revendication 1, caractérisé par le fait qu'une valeur limite minimum ainsi qu'une valeur limite maximum variant en fonction aussi bien de la température extérieure que de la caractéristique de chauffage de jour/nuit sont fixées pour la température d'alimentation des récepteurs et entre lesquelles s'étend la plage de réglage de la température d'alimentation de sorte que même des chauffe-eau à circulation (1) dont la température d'alimentation doit être supérieure à des seuils déterminés, peuvent être commandés.

3. Régulateur suivant la revendication 1 ou 2, caractérisé par le fait qu'il est prévu, pour passer du chauffage de nuit à allure réduite à la consigne de jour, un chauffage rapide pour lequel la consigne pour la température d'alimentation est augmentée en fonction de la température extérieure, et que la valve d'alimentation (9) n'est fermée que lorsque cette valeur est atteinte.

4. Régulateur suivant la revendication 2, caractérisé par le fait que les générateurs de signaux de jour/nuit (16, 17, 26, 27) pour la température d'alimentation sont mis, par l'action d'un commutateur (21, 22) commandé par une horloge et d'un générateur de signaux de consigne minimum (40), sur une entrée (41) d'un comparateur (33) dont l'autre entrée est reliée au générateur de signaux de température d'alimentation effective (12).

Fig. 1

0 036 567

Fig. 2